# EUROPÄISCHE PATENTSCHRIFT

(11) **EP 2 885 856 B1**
(45) Veröffentlichungstag und Bekanntmachung des Hinweises auf die Patenterteilung: **08.04.2020**
(21) Anmeldenummer: 12780445.8
(22) Anmeldetag: 12.10.2012
(51) Int. Cl.: H02K 3/34, H02K 3/30, H02K 3/40, H02K 15/12, H01B 13/14

(54) **VERFAHREN ZUR HERSTELLUNG EINER ISOLATION EINES LEITERS**
PROCESS FOR MANUFACTURING CONDUCTOR INSULATION
PROCÉDÉ DE FABRICATION D'ISOLATION DE CONDUCTEUR

(43) Veröffentlichungstag der Anmeldung: 24.06.2015
(73) Patentinhaber: Siemens Aktiengesellschaft, 80333 München (DE)
(72) Erfinder: GRÜBEL, André, 90768 Fürth (DE); KLAUSSNER, Bernhard, 90408 Nürnberg (DE); SCHÄFER, Klaus, 90455 Nürnberg (DE); ÜBLER, Matthias, 92289 Ursensollen (DE)
(86) Internationale Anmeldenummer: PCT/EP2012/070300
(87) Internationale Veröffentlichungsnummer: WO 2014/056547

(56) Entgegenhaltungen:
- EP-A1- 0 510 453
- EP-A1- 1 271 565
- WO-A1-2004/059819
- WO-A1-2006/061360
- DE-C1- 10 134 252
- GB-A- 368 443
- US-A- 5 864 193

## Beschreibung

Die Erfindung betrifft ein Verfahren zur Isolation eines Leiters, bei dem die Isolation des Leiters durch Extrusion eines Thermoplastes auf den Leiter aufgebracht wird. Ferner betrifft die Erfindung einen Stator, einen Rotor und eine elektrische Maschine, beispielsweise einen Elektromotor, einen Transformator oder einen Elektromagnet, die derartige isolierte Leiter aufweisen.

Dynamoelektrische Maschinen wie Elektromotoren oder Generatoren, sowie Transformatoren oder Elektromagneten, besitzen in der Regel stromdurchflossene Wicklungen. Diesen Wicklungen ist zu eigen, dass die einzelnen Leiter elektrisch gegenüber ihrer Umgebung isoliert sein müssen. Für eine gute elektrische Isolation wurden die Leiter bisher oftmals durch das Umwickeln von Glimmerband oder - bei nur geringer Potentialdifferenz zur Umgebung - durch Imprägnierung isoliert. Das Umwickeln eines Leiters mit Glimmerband ist jedoch ein aufwendiger und fehleranfälliger Prozess und somit kostenintensiv. Zur Einsparung von Produktionskosten wird daher das Umwickeln des Leiters mit Glimmerband, beispielsweise durch ein Einbetten des Leiters in einen Kunststoffmantel, ersetzt, insofern die dadurch erreichte Isolation ausreichend ist. In dieser Schrift werden die Bezeichnungen Isolation und Isolationsschicht synonym verwendet.

Aus DE 197 48 529 A1 ist bekannt, imprägnierte Wickeldrähte im Extrusionsverfahren zu beschichten. Für die Isolation werden Thermoplaste oder Hochtemperaturthermoplaste verwendet, die eine gute Bindung zu Imprägniermitteln aufweisen. So soll eine porenfreie Isolationsschicht erzeugt werden. Als vorteilhaft gegenüber einer Isolation mit einem Isolierlack wird beispielsweise angegeben, dass so in leichter eine höhere Schichtdicke erzielt werden kann. Zusammen mit der Beimengung von anorganischen Füllstoffen soll so eine bessere Isolation der Leiter erreicht werden.

DE 101 34 252 C1 beschreibt ein Verfahren zur Herstellung eines Kabels, um abwechselnd dünnere und dickere Abschnitte eines extrudierten Mantels des Kabels auf einfache und kostengünstige Weise ohne Verwendung eines separaten Formwerkzeugs zu bilden.

EP 0 510 453 A1 beschreibt eine Hochspannungsleitung mit unterschiedlicher Dicke der Isolation. Es wird vorgeschlagen, die Enden der Kabel, nahe der Steckverbinder, mit einer dickeren Isolation zu versehen als im mittleren Bereich.

WO 2006/061360 A1 beschreibt einen Leiter und ein Herstellungsverfahren eines solchen Leiters, wobei der Leiter bereichsweise mit mehreren Schichten eines Isolationsmaterials beaufschlagt wird.

EP 1 271 565 A1 beschreibt die Herstellung einer Leitung, welche mit einem Schaum den Bedürfnissen entsprechend isoliert wird.

WO 2004/059819 A1 beschreibt ein Kabel, wobei eine Litze des Kabels dergestalt isoliert wird, dass Hohlräume isoliert werden.

Die Druckschrift WO 01/95345 A1 offenbart ein Kabel, dessen Isolierung hinsichtlich seiner Dicke variiert. Dabei ist vorgesehen, dass eine Dicke der Isolierung entlang einer longitudinalen Richtung des Kabels variiert.

Das US-Patent US 5 864 193 A zeigt eine rotierende elektrische Maschine, welche eine verbesserte Isolierung für eine Ankerspule aufweist. Diese elektrisch rotierende Maschine weist eine erste Isoliereinheit und eine zweite Isoliereinheit auf, welche in Aussparungen angeordnet sind.

Die Druckschrift GB 368 443 A offenbart Wicklungen für eine elektrische Maschine, bei der eine Schichtdicke der Isolierung variiert. Der gemeinsame Isoliermantel für die mehreren Leiter ist zunächst dicker ausgeführt. Im weiteren Verlauf des Verfahrens wird das überschüssige Material vom gemeinsamen Isoliermantel entfernt.

Der Erfindung liegt die Aufgabe zugrunde, die Wicklungen besser zu isolieren sowie Isolationsmaterial zu sparen.

Diese Aufgabe wird durch ein Verfahren zur Isolation für elektrische Leiter gelöst, wie in Anspruch 1 erwähnt ist, wobei die Isolation durch ein Spritzgießverfahren, vorzugsweise einer Extrusion, so gestaltet ist, dass die Isolation des Leiters sowohl in Form und Schichtdicke entlang desselben in modulierter Weise erfolgt, so dass nach einem anschließenden Wicklungsprozess die Wicklung selbst ein einheitliches äußeres Maß aufweist, sowie dass die in der Wicklung innen liegenden Leiterflächen mit einer geringeren Schichtdicke isoliert werden als die, die sich an den Außenseiten der Wicklung befinden.

Der Erfindung liegt die Erkenntnis zugrunde, dass ein Leiterabschnitt in unterschiedlichen Positionen der Wicklung eine unterschiedliche Potentialdifferenz zu seiner Umgebung aufweist, sowie dass die Potentialdifferenz in der Regel richtungsabhängig ist. Dies zusammengenommen verlangt nach einer angepassten Schichtdicke und Form der Isolierung. Dies kann mittels der erfindungsgemäßen Methode sowohl für Leiter mit einem runden - sowie einem rechteckigen Profil angewandt werden. Der verwendete Leiter kann zudem vor der Extrusion schon imprägniert sein. Der Einfachheit halber bezieht sich die nachfolgende Beschreibung beispielhaft auf ein rechteckiges Leiterprofil. Die Modulation der Form und Schichtdicke der Isolation des Leiters ist dabei mit dem Aufwicklungsprozess dergestalt synchronisiert, dass die Isolationsschichten des Leiters auf den, nach dem Wicklungsprozess nach außen zeigenden Seiten, eine höhere Schichtdicke als die Leiterseiten aufweisen, welche zum Inneren der Wicklung hin gerichtet sind. Somit sind die am Rand der Wicklung verlaufenden Leiter in asymmetrischer Form isoliert. Demgegenüber können die Leiter, welche im Inneren der Wicklung verlaufen, mit einer Isolation einer gleichmäßig aufgetragenen Schichtdicke ummantelt sein. Für dieses Verfahren wird vorzugsweise eine Extrusionsdüse eingesetzt, deren Düsenform in Form und Größe verändert werden kann. Durch eine intelligente Steuerung ist die Düsenform so einzustellen, dass der durchlaufende Leiterbereich, gemäß seinem Einsatzbereich nach, isoliert werden kann. So ist vorzugsweise die Schichtdicke an den in der Wicklung außen liegenden Seiten erhöht im Vergleich zu den Seiten, die ins Innere der Wicklung zeigen. Um dies zu erreichen, kann beispielsweise die Position des Leiters im einstellbaren Düsenquerschnitt fortlaufend verändert werden. Bevorzugt wird jedoch die Düsenform in Form und im Querschnitt selbst verändert, wobei die Leiterposition parallel zum Ausgang der Extrusionsdüse unverändert bleibt. Mittels der Extrusionsdüse wird nur so viel Kunststoff auf den Leiter aufgetragen, wie für die Isolation benötigt wird. Die Einstellung der Düsenform ist gemäß dem Fortschritt des Wicklungsprozesses zu wählen. So ist beispielsweise die Isolationsschicht für die am Rand der Wicklung liegenden Leiter asymmetrisch aufzutragen, insbesondere falls nach dem Einbau der Wicklung naheliegend ein weiteres stromführendes Element befindet. Dieses Verfahren besitzt gegenüber dem bisherigen Stand der Technik den Vorteil, dass sowohl die außen liegenden Wicklungen gegenüber ihrer Umgebung sehr gut elektrisch isoliert sind und zugleich die Leiter im Inneren der Wicklung eine, den geringen Potentialdifferenzen zwischen benachbarten Leitern Rechnung tragend, dünnere Isolierschicht aufweisen. So kann der Querschnitt der Spule bei einer konstanten Windungszahl und Leiterquerschnitt reduziert - und zugleich Isolationsmaterial eingespart werden.

Vorteilhaft für dieses Verfahren ist ein Spritzgießverfahren, insbesondere ein Extrusionsverfahren, unter Verwendung von Thermoplasten und/oder Elastomere, insbesondere Polyetheretherketon, Polyaryletherketon, Polyimid, Polyethersulfon, Polyphenylsulfid, Polyphthalamid, Perfluoralkoxylalkan, sowie Beimischungen von anorganischen Materialien wie Glimmer oder Metalloxide zum Zwecke der Isolation. Kunststoffe, insbesondere Hochtemperaturthermoplaste sind für die Isolation von Wicklungen in elektrischen Maschinen aufgrund ihrer chemischen und mechanischen Stabilität bei hohen Temperaturen gut geeignet. Weiterhin können Hochtemperaturthermoplaste im Spritzgießverfahren porenfrei auf den, gegebenenfalls schon imprägnierten, Leiter aufgebracht werden. Somit kann für eine geringe Schichtdicke eine ausreichende Isolation erreicht werden. Die elektrische Isolationsfähigkeit ist bei Hochtemperaturthermoplasten meist sehr gut und kann durch Beimischung von anorganischen Materialien, insbesondere von Metalloxiden oder Silicaten wie Glimmer noch verbessert werden. Zusätzlich können gröbere Anteile von anorganischen Beimengungen als Abstandhalter zwischen den einzelnen Leitern dienen.

Eine vorteilhafte Ausgestaltung ist ein Verfahren, bei dem ein imprägnierter Leiter nur bereichsweise isoliert wird. Bei dieser Art der Isolation kann beispielsweise nur der Bereich des Leiters mittels Extrusion isoliert werden, der sich nahe der Oberfläche der Wicklung befinden wird. Eine Nachbehandlung der Wicklung, beispielsweise durch Pressung unter Wärmeeinwirkung, kann für eine gleichmäßige Verteilung des Isolationsmaterials parallel zum Querschnitt sorgen. Da ein Imprägniermaterial in der Regel mit einer geringeren Schichtdicke aufgetragen werden kann als ein Thermoplast durch ein Spritzgießverfahren, können so stabile und nach außen gut isolierte Wicklungen mit einem geringen Querschnitt hergestellt werden, da die Thermoplaste gegebenenfalls nur die Zwischenräume der imprägnierten Leiter ausfüllt und so im Inneren der Wicklung keinen zusätzlichen Raum beansprucht.

Weiterhin vorteilhaft ist ein Verfahren, bei dem nach dem Wickelprozess die Wicklung unter Wärmeeinwirkung, beispielsweise durch Pressen, Ziehen, Verkleben, Sintern und/oder Biegen, nachbehandelt wird. Spulen werden nach dem Wickelprozess gemeinhin durch mechanische Verformung in ihre Einbauform gebracht. Dieser Prozess wird häufig als Formziehen bezeichnet. Dabei wird die Wicklung in ihre spätere Einbauform gebracht. Diese Nachbehandlung der Wicklung, kann entlang des Querschnitts der Wicklung durch einen Pressvorgang unter Einwirkung von Wärme erfolgen. Dies hilft, die Wicklung in Ihrer Form zu stabilisieren und gegebenenfalls die Isolation der im Inneren der Wicklung liegenden, bereichsweise nur imprägnierten, Leiter zu unterstützen. Durch die Wärmeeinwirkung wird die Isolationsschicht, gegebenenfalls teilweise, geschmolzen und die Wicklung erhält einen festen Zusammenhalt. Diese Nachbehandlung kann auch dazu dienen, Isolationsmaterial an die Stellen zu transportieren, an denen zuvor kein stabilisierendes Isolationsmaterial durch Extrusion aufgebracht wurde. Diese Form der Nachbehandlung wird manchmal auch als "Verbacken" bezeichnet. Gleichzeitig unterstützt die Wärmeeinwirkung die Formänderung der Wicklung. Der Press- und Ziehvorgang stellt sicher, dass die Leiter entlang der Wicklung parallel verlaufen.

Bei einer weiteren vorteilhaften Ausgestaltung des Verfahrens wird die Modulation der Form und Schichtdicke der aufgebrachten Isolation entlang des Leiters durch, vorzugsweise thermische und/oder mechanische Bearbeitung der schon vorhandenen Isolationsschicht, erzeugt. Neben der Änderung der des Querschnitts und der Form der Extrusionsdüse kann die Isolationsschicht zusätzlich nachbearbeitet werden. Diese Nachbearbeitung kann beispielsweise durch ein spannendes Abtragen von Teilen der Isolation oder durch eine nachträgliche Verformung der Isolation, insbesondere mit Hilfe einer Wärmebehandlung, erfolgen. Diese Form der Nachbearbeitung kann sowohl zur feineren Modulierung der Isolation - als auch zur Modulierung der Isolation angewandt werden. Letztgenanntes kann insbesondere dann eingesetzt werden, falls zeitweilig die Funktion der der Extrusionsdüse ausfällt. Somit kann ein Produktionsausfall vermieden werden.

Bei einer weiteren vorteilhaften Ausgestaltung des Verfahrens erfolgt eine Modulation der Form und Schichtdicke der Isolierung entlang des Leiters durch eine, bereichsweise mehrfache Ausführung der Isolation, insbesondere mit jeweils unterschiedlichen Isolationsmaterialen. Durch dieses Verfahren können kritische Bereiche einer Wicklung, wie beispielsweise im Bereich eines Knicks, zusätzlich gegen elektrische oder thermische Einflüsse isoliert werden. Zudem können weitere Materialien auf die Isolation aufgetragen werden, wie beispielsweise Klebemittel oder Schutzummantelungen gegen Chemikalien.

Bei einer weiteren vorteilhaften Ausgestaltung des Verfahrens wird die bereichsweise entlang der Wicklung eine weitere Isolation, insbesondere durch thermisch unterstütztes Zusammenfügen mit der vorhandenen Isolation aufgebracht. Wie im letzten Abschnitt angedeutet, ist für manche Einsatzgebiete von Wicklungen eine zusätzliche Isolation derselben notwendig. Um diese zusätzliche Isolation mit der Wicklung fest zu verbinden, kann nach dem Wicklungsprozess und/oder nach dem Formziehen der Wicklung, eine Zusammenfügung der Elemente, vorzugsweise durch Teilschmelzen oder Verkleben, erfolgen. Diese zusätzliche Schicht kann einen festen Zusammenhalt der Wicklung unterstützen. Eine solche Isolation kann beispielsweise eine Beschichtung der Wicklung mit einer vorwiegend anorganischen Zusammensetzung sein, die mit der Kunststoffschicht fest verbunden wird. Dies hätte den Vorteil einer sehr guten elektrischen Isolation bei nur geringer Vergrößerung der Wicklung. Als Wärmequelle kann eine Strahlungsquelle, der Kontakt mit temperierten Bearbeitungselementen, insbesondere einer Pressform, dienen.

Bei einer weiteren Ausgestaltungsform dieses Verfahrens wird die Modulierung der Form und Schichtdicke der Isolation aufgrund einer Überwachung des Wicklungsprozesses gesteuert, sowie der Wicklungsprozess durch eine Überwachung der Isolation selbst unterstützt. Hierbei können beispielsweise die Form und das Außenmaß der sich bildenden Wicklung kontrolliert werden und bei Normabweichungen diese Messwerte in die Modulierung der Schichtdicke und Form des nachfolgenden Leiterbereiches mit einfließen. In der anderen Richtung ist es möglich, dass der Wicklungsprozess durch eine Überwachung während oder nachfolgend der Isolation beeinflusst wird. Selbst eine geschlossene Schleife der gegenseitigen Einflussnahme ist denkbar. Vorteilhaft ist diese Modulierung einzelner Prozesse wie der Isolation oder der Wicklung um gegebenenfalls Unstimmigkeiten der Modulierung während der Isolation auszugleichen.

Die Aufgabe wird weiter durch eine Wicklung gelöst, Wicklung mit mindestens einem isolierten Leiter, der mit einem Verfahren nach einem der vorangehenden Ansprüche hergestellt ist. Aufgrund der guten und angepassten Isolation bei gleichzeitig geringen Einbaumaßen, sowie einer hohen Genauigkeit derselben, kann eine solche Wicklung höhere Spannungen führen, als nach dem jetzigen Stand der Technik möglich ist. Zudem führt die verbesserte Raumausnutzung in der Wicklung zur Möglichkeit eines höheren Leiterquerschnittes, was einen geringen Innenwiderstand der Wicklung zur Folge hat.

Die Aufgabe wird weiter durch einen Stator oder einen Rotor mit einer derartigen Wicklung gelöst. Eins solcher Stator oder Rotor kann durch die optimierte Bauform der Wicklung beispielsweise kleiner und leichter dimensioniert werden. Zusätzlich wird durch die Einsparung von Isolationsmaterial die Entwärmung der Wicklung verbessert.

Die Aufgabe wird weiter durch eine elektrische Maschine, die einen Stator mit einer solchen Wicklung, einen Rotor mit einer solchen Wicklung und/oder eine solche Wicklung für einen anderen Zweck besitzt, eingesetzt werden. Insbesondere kann eine solche elektrische Maschine ein Elektromotor, ein Generator, oder ein Transformator sein - sowie ein Elektromagnet sein.

Eine weitere Ausgestaltungsform ist im Anspruch 11 erwähnt. Dieser Anspruch betrifft eine elektrische Maschine, welche mindestens zwei Wicklungen gemäß Anspruch 8 aufweist, welche benachbart gelagert sind.

Im Folgenden wird die Erfindung anhand der in den Figuren dargestellten Ausführungsbeispiele näher beschrieben und erläutert. Es zeigen:
- FIG 1: eine anhand einer schematischen Darstellung einer Vorrichtung das Verfahren zur Isolation eines Leiters sowie den anschließenden Wicklungsprozess,
- FIG 2: einen nicht maßstabgetreuen Querschnitt einer mit dem in FIG 1 dargestellten Verfahren erzeugten Wicklung,
- FIG 3: einem Querschnitt einer nachbehandelten Wicklung und
- FIG 4: die in FIG 1 dargestellte Vorrichtung zur Isolation eines Leiters mit zusätzlicher Regelung.

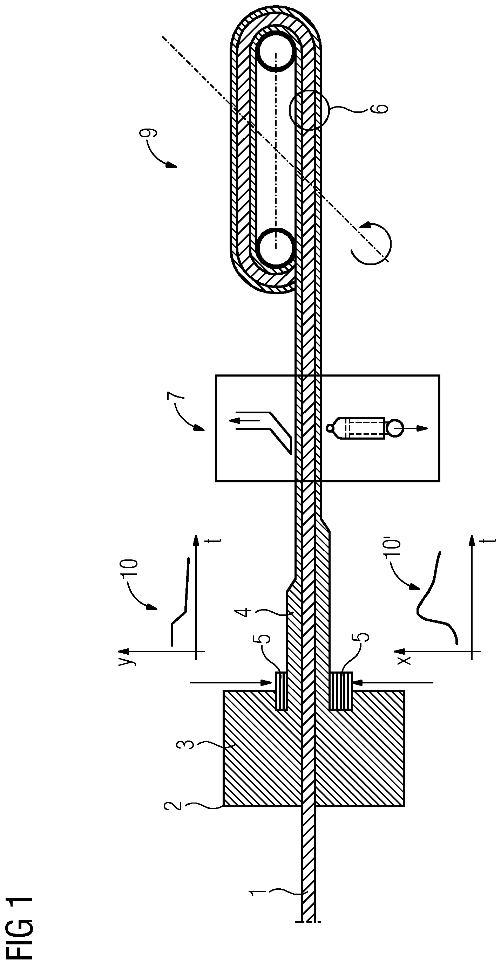

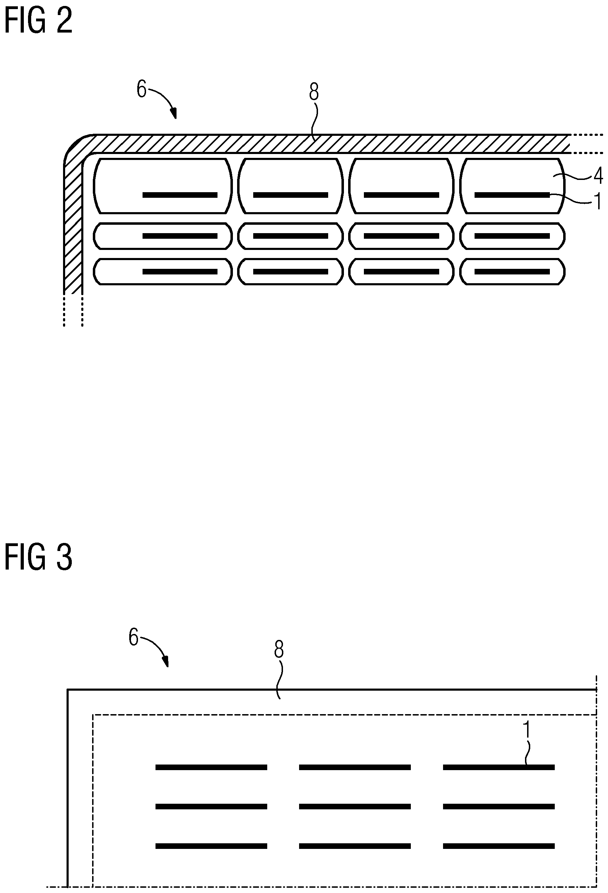

FIG 1 zeigt eine schematische Darstellung des Verfahrens zur Isolation eines Leiters 1 sowie den anschließenden Wicklungsprozess 9, wobei der Leiter 1 eine Extrusionskammer 2 durchläuft, welche mit Isolationsmaterial 3 fortwährend befüllt wird. Die Form der Isolation 4 auf dem Leiter wird durch die Extrusionsdüse 5 erzeugt. Der Auslass dieser Extrusionsdüse 5 wird je nach Bereich des durchlaufenden Leiters 1 so eingestellt, dass nach dem Wicklungsprozess 9 der Wicklung 6 (in FIG 2 im Querschnitt gezeigt) eine Form und Schichtdicke der Isolation 4 resultiert, wie beispielsweise in FIG 2 gezeigt ist. Die Modulierung der Form und Schichtdicke wird durch die Diagramme 10, 10' symbolisiert, wobei x (in Diagramm 10) und y (in Diagramm 10') die Schichtdicken in verschiedenen Raumrichtungen bedeuten sollen. Die Kurvenverläufe in den Diagrammen 10, 10' sind bewusst unterschiedlich gewählt, um die Möglichkeit der Asymmetrie zu verdeutlichen. Die Abszissen beider Diagramme sollen proportional der Durchlaufposition des Leiters oder der Zeit sein. Zwischen der Extrusionskammer 2 und dem Wicklungsprozess 9 kann die Isolation 4 noch weiter bearbeitet werden. Diese Bearbeitungsvorrichtung 7 für die Nachbearbeitung des (bereichsweise isolierten) Leiters 1 soll hier symbolisch angedeutet werden. So kann dort nach Beendigung des Wickelprozesses 9 die Wicklung 6 vom restlichen Leiter 1, und der gegebenenfalls aufgetragenen Isolation 4, abgetrennt werden. Vorteilhaft ist diese Bearbeitungsvorrichtung 7, da die Modulation gegebenenfalls auch vollständig in dieser durchgeführt werden kann, so dass der Herstellungsprozess bei einer Funktionsstörung der Extrusionsdüse 5 nicht unterbrochen werden muss. Nach dem Wicklungsprozess 9 kann eine Nachbearbeitung durch einen Pressvorgang und/oder einer Wärmebehandlung mittels des temperierbaren Pressmittels 13 (gezeigt in FIG 3) erfolgen.

FIG 2 zeigt einen (nicht maßstabgetreuen) Querschnitt einer mit dem erfindungsgemäßen Verfahren erzeugte Wicklung 6 nach dem Wickelprozess 9. Hier sind in schematischer Weise die einzelnen Isolation für einen rechteckigen Leiter 1 dargestellt. Die Asymmetrie der Isolation 4 ist hier bei den Leitern 1 gezeigt, die Flächen zur Außenseite der Wicklung 6 hin gerichtet aufweisen. Die Aussparungen zwischen den inneren Leitern sind nur der Unterscheidung der einzelnen Windungen wegen gezeichnet. Sie sind nicht notwendig in der Wicklung 6 vorhanden. Im Falle einer lediglich bereichsweise aufgetragenen Isolation 4 sind die inneren Leiter nur mit Imprägniermittel umrandet und die gegebenenfalls resultierenden Lufteinschlüsse würden durch das Verbacken mit Isolationsmaterial gefüllt. Nach dem Wicklungsprozess kann bei Bedarf eine weitere Isolation 4 auf die Wicklung 6 aufgebracht werden.

FIG 3 zeigt einen Querschnitt einer nachbehandelten Wicklung. Hier sind die Isolationsschichten 4 der Leiter 1, beispielsweise durch Teilschmelzen, untereinander fest verbunden so dass keine Lücken oder Lufteinschlüsse mehr sichtbar sind. Die zusätzliche Schicht ist hier noch symbolhaft dargestellt, um aufzuzeigen, dass diese aus einem unterschiedlichen Material bestehen kann und/oder mittels einer anderen Befestigungsmethode mit der Wicklung 6 verbunden sein kann und so Teil derselben geworden ist.

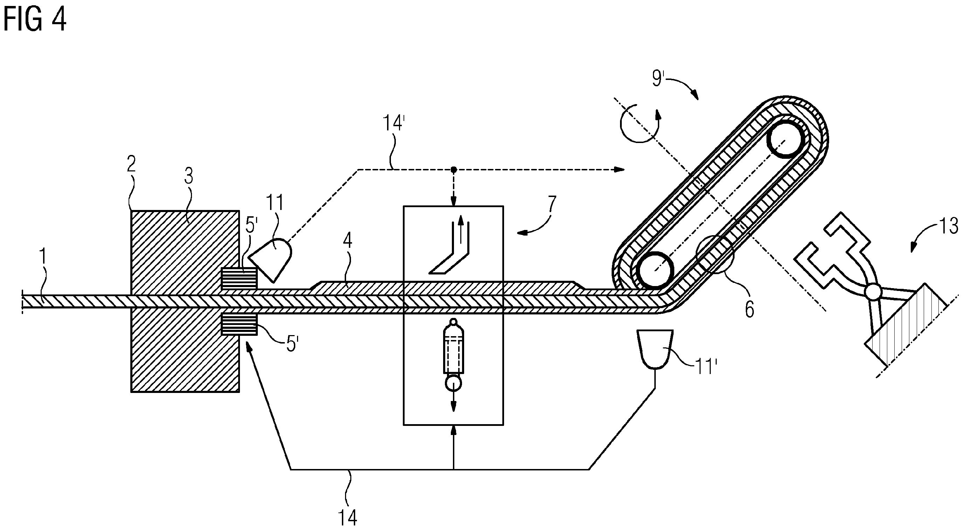

FIG 4 zeigt eine erweiterte Ausführungsform, die eine zusätzliche eine Regelung enthält. Diese Figur ist analog der FIG 1, mit dem Zusatz von zwei Überwachungselementen 11, 11' und den entsprechenden Steuerleitungen 14, 14'. Das eine Überwachungselement 11 überwacht die Modulierung der Isolation nahe der Extrusionsdüse 5' und steuert daraufhin die Bearbeitungsvorrichtung 7' und/oder den Wicklungsprozess 9'. Das andere Überwachungselement 11' überwacht den Wicklungsprozess und steuert bei einer steuert die Bearbeitungsvorrichtung 7' und/oder die Extrusionsdüse an, um eine gegebenenfalls auftretende Normabweichung auszugleichen. Im Rahmen einer Rücckopplung können auch beide Regelungen während dem erfindungsgemäßen Verfahren - gegebenenfalls zeitlich überlappend - ausgeführt werden.

Zusammenfassend betrifft diese Erfindung ein Verfahren zur Herstellung einer Isolation 4 eines Leiters 1, insbesondere für elektrische Maschinen, bei dem die Isolation 4 des Leiters 1 durch Extrusion eines Thermoplastes um den Leiter 1 aufgebracht wird. Dieses Verfahren ist dadurch gekennzeichnet dass die Isolation 4 des Leiters 1 in Form und Schichtdicke entlang desselben in modulierter Weise erfolgt. Dadurch kann nach einem anschließenden Wicklungsprozess 9 die Wicklung 6 ein einheitliches äußeres Maß aufweisen. Zudem kann die Form und Schichtdicke der Isolation 4 so gestaltet werden, dass die in der Wicklung 6 innen liegenden Leiterflächen mit einer geringeren Schichtdicke isoliert werden als die, die sich an den Außenseiten der Wicklung 6 befinden.

## Patentansprüche

1. Verfahren zur Herstellung einer Isolation (4) eines Leiters (1), insbesondere für elektrische Maschinen, bei dem die Isolationsschicht (4) des Leiters (1) durch Extrusion eines Thermoplastes um den Leiter aufgebracht wird,
**dadurch gekennzeichnet, dass**
- die Isolation des Leiters (1) in Form und Schichtdicke entlang desselben in modulierter Weise so erfolgt, dass nach einem anschließenden Wicklungsprozess (9, 9') die Wicklung (6) selbst ein einheitliches äußeres Maß aufweist, sowie dass
- die in der Wicklung (6) innen liegenden Leiterflächen mit einer geringeren Schichtdicke isoliert werden als die, die sich an den Außenseiten der Wicklung (6) befinden, sodass die Schichtdicke an den Außenseiten der Wicklung (6) erhöht ist im Vergleich zu der an den innen liegenden Leiterflächen, während die innen liegenden Leiterflächen mit einer Isolation einer gleichmäßig aufgetragenen Schichtdicke ummantelt sind,
- wobei nach dem Wickelprozess (9) die Wicklung (6) unter Wärmeeinwirkung durch Pressen, Ziehen, Verkleben, Sintern und/oder Biegen, nachbehandelt wird.

2. Verfahren nach Anspruch 1, wobei der Leiter (1) oder die Wicklung (6) durch Spritzgießverfahren mit Thermoplasten und/oder Elastomere, insbesondere Polyetheretherketon, Polyaryletherketon, Polyimid, Polyethersulfon, Polyphenylsulfid, Polyphthalamid, Perfluoralkoxylalkan, sowie Beimischungen von anorganischen Materialien wie Glimmer oder Metalloxide, isoliert werden.

3. Verfahren nach einem der vorangehenden Ansprüche, wobei ein imprägnierter Leiter (1) nur bereichsweise isoliert wird.

4. Verfahren nach einem der vorangehenden Ansprüche, wobei die Modulation der Form und Schichtdicke der aufgebrachten Isolation entlang des Leiters (1) durch, vorzugsweise thermische und/oder mechanische Bearbeitung der Isolationsschicht, erzeugt wird.

5. Verfahren nach einem der vorangehenden Ansprüche, wobei die Modulation der Form und Schichtdicke der Isolation (4) entlang des Leiters (1) durch eine, bereichsweise mehrfache Ausführung der Isolation, insbesondere mit unterschiedlichen Isolationsmaterialen, erfolgt.

6. Verfahren nach einem der vorangehenden Ansprüche, wobei bereichsweise entlang der Wicklung eine weitere Isolation (8), insbesondere durch thermisch unterstütztes Zusammenfügen mit der vorhandenen Isolation (4), aufgebracht wird.

7. Verfahren nach einem der vorangehenden Ansprüche, wobei die Modulierung der Form und Schichtdicke der Isolation aufgrund einer Überwachung (11') während des Wicklungsprozesses (9) gesteuert wird, sowie dass der Wicklungsprozess (9) durch eine Überwachung (11) der Isolation selbst unterstützt wird.

8. Wicklung mit mindestens einem isolierten Leiter (1), der mit einem Verfahren nach einem der vorangehenden Ansprüche hergestellt ist.

9. Rotor einer elektrischen Maschine, aufweisend eine Wicklung (6) nach Anspruch 8.

10. Stator einer elektrischen Maschine, aufweisend eine Wicklung (6) nach Anspruch 8.

11. Elektrische Maschine, aufweisend mindestens zwei Wicklungen (6) nach Anspruch 8, die benachbart gelagert sind und die Isolierung (4) der Leiterschicht entlang der benachbarten Seitenflächen eine höhere Schichtdicke der Isolation (4) aufweist als die nach innen zeigenden Leiterflächen.

12. Elektrische Maschine, aufweisend einen Stator gemäß Anspruch 10 und/oder einen Rotor gemäß Anspruch 9.

13. Elektrische Maschine, insbesondere ein Transformator, ein Elektromotor oder ein Generator, mit einer Wicklung gemäß Anspruch 8.

14. Ein Elektromagnet mit einer Wicklung gemäß Anspruch 8.

## Claims

1. Method for manufacturing an insulation (4) of a conductor (1), in particular for electric machines, in which the insulation layer (4) of the conductor (1) is applied by extruding a thermoplastic around the conductor,
**characterised in that**
- the insulation of the conductor (1) is carried out in a modulated manner in terms of shape and slice thickness along the same such that following a subsequent winding process (9, 9') the winding (6) itself has a uniform outer dimension, and that
- the conductor surfaces lying inside the winding (6) are insulated with a thinner slice thickness than those disposed on the outer sides of the winding (6) so that the slice thickness on the outer sides of the winding (6) is increased compared with that on the conductor surfaces lying on the inside, while the conductor surfaces lying on the inside are encased with an insulation of a uniformly applied slice thickness,
- wherein following the winding process (9) the winding (6) is post-treated under exposure to heat by means of pressing, pulling, gluing, sintering and/or bending.

2. Method according to claim 1, wherein the conductor (1) or the winding (6) are insulated by means of injection moulding methods with thermoplastics and/or elastomers, in particular polyether ether ketone, polyaryletherketone, polyimide, polyethersulfone, polyphenylene sulphide, polyphthalamide, perfluoro alkoxyl alkane, and admixtures of inorganic materials such as mica or metal oxides.

3. Method according to one of the preceding claims, wherein an impregnated conductor (1) is only insulated in sections.

4. Method according to one of the preceding claims, wherein the modulation of the shape and slice thickness of the applied insulation along the conductor (1) is produced by means of preferably thermal and/or mechanical processing of the insulation layer.

5. Method according to one of the preceding claims, wherein the modulation of the shape and slice thickness of the insulation (4) along the conductor (1) takes place by means of repeatedly carrying out insulation in sections, in particular with different insulation materials.

6. Method according to one of the preceding claims, wherein a further insulation (8), in particular by means of thermally assisted joining with the existing insulation (4), is applied in sections along the winding.

7. Method according to one of the preceding claims, wherein the modulation of the shape and slice thickness of the insulation is controlled based on a monitoring (11') during the winding process (9), and that the winding process (9) is assisted by monitoring (11) the insulation itself.

8. Winding with at least one insulated conductor (1) which is produced with a method according to one of the preceding claims.

9. Rotor of an electric machine, having a winding (6) according to claim 8.

10. Stator of an electric machine, having a winding (6) according to claim 8.

11. Electric machine, having at least two windings (6) according to claim 8, which are mounted adjacently and the insulation (4) of the conductor layer along the adjacent lateral surfaces has a thicker slice thickness of the insulation (4) than the inward-pointing conductor surfaces.

12. Electric machine, having a stator according to claim 10 and/or a rotor according to claim 9.

13. Electric machine, in particular a transformer, an electric motor or a generator, with a winding according to claim 8.

14. Electromagnet with a winding according to claim 8.

## Revendications

1. Procédé de fabrication d'une isolation (4) d'un conducteur (1), notamment pour des machines électriques, dans lequel on dépose la couche (4) d'isolation du conducteur (1) par extrusion d'une matière thermoplastique autour du conducteur,
**caractérisé en ce que**
- l'isolation du conducteur, en forme et en épaisseur de couche, s'effectue le long de celui-ci de façon modulée, de manière à ce qu'après une opération (9, 9') d'enroulement rattachée, l'enroulement (6) soi-même ait une dimension extérieure uniforme, ainsi que
- les surfaces de conducteur se trouvant à l'intérieur dans l'enroulement (6) sont isolées par une épaisseur de couche plus petite que celles qui se trouvent sur les côtés extérieurs de l'enroulement (6), de sorte que l'épaisseur de couche sur les côtés extérieurs de l'enroulement (6) est plus grande que sur les surfaces du conducteur se trouvant à l'intérieur, tandis que des surfaces du conducteur se trouvant à l'intérieur sont entourées d'une isolation d'une épaisseur de couche déposée uniformément,
- dans lequel, après l'opération (9) d'enroulement, on post-traite l'enroulement (6) sous l'action de la chaleur par pressage, traction, collage, frittage et/ou cintrage.

2. Procédé suivant la revendication 1, dans lequel on isole le conducteur (1) ou l'enroulement (6) par un procédé de moulage par injection de matières thermoplastiques et/ou d'élastomères, notamment de polyéthercétone, de polyaryléthercétone, de polyimide, de polyéthersulfone, de poly(sulfure de phényle), de polyphtalamide, de perfluoroalcoxylalcane, ainsi que des additions de matières minérales, comme de mica ou d'oxydes métalliques.

3. Procédé suivant l'une des revendications précédentes, dans lequel on n'isole que par endroit un conducteur (1) imprégné.

4. Procédé suivant l'une des revendications précédentes, dans lequel on produit la modulation de la forme et de l'épaisseur de couche de l'isolation déposée le long du conducteur (1) par traitement, de préférence thermique et/ou mécanique, de la couche d'isolation.

5. Procédé suivant l'une des revendications précédentes, dans lequel la modulation de la forme et de l'épaisseur de couche de l'isolation (4) le long du conducteur (1) s'effectue par une réalisation en plusieurs fois, endroit par endroit, de l'isolation, en ayant notamment des matériaux d'isolation différents.

6. Procédé suivant l'une des revendications précédentes, dans lequel on dépose, par endroit, le long de l'enroulement, une autre isolation (8), notamment par jonction assistée thermiquement avec l'isolation (4) présente.

7. Procédé suivant l'une des revendications précédentes, dans lequel on règle la modulation de la forme et de l'épaisseur de couche de l'isolation sur la base d'un contrôle (11') pendant l'opération (9) d'enroulement, ainsi que l'on assiste l'opération (9) d'enroulement par un contrôle (11) de l'isolation soi-même.

8. Enroulement ayant au moins un conducteur (1) isolé, qui est fabriqué par un procédé suivant l'une des revendications précédentes.

9. Rotor d'une machine électrique ayant un enroulement (6) suivant la revendication 8.

10. Stator d'une machine électrique ayant un enroulement (6) suivant la revendication 8.

11. Machine électrique ayant au moins deux enroulements (6) suivant la revendication 8, qui sont montés en étant voisins et l'isolation (4) de la couche de conducteur le long de surfaces latérales voisines, a une épaisseur de couche de l'isolation (4) plus grande que les surfaces de conducteur tournées vers l'intérieur.

12. Machine électrique ayant un stator suivant la revendication 10 et/ou un rotor suivant la revendication 9.

13. Machine électrique, notamment transformateur, moteur électrique ou générateur, ayant un enroulement suivant la revendication 8.

14. Electroaimant ayant un enroulement suivant la revendication 8.
